(19) Europäisches Patentamt / European Patent Office / Office européen des brevets

(11) **EP 2 960 972 A1**

(12) **EUROPEAN PATENT APPLICATION**
published in accordance with Art. 153(4) EPC

(43) Date of publication:
**30.12.2015 Bulletin 2015/53**

(51) Int Cl.:
*H01M 4/587* (2010.01)   *H01M 10/0525* (2010.01)

(21) Application number: **14772668.1**

(22) Date of filing: **20.03.2014**

(86) International application number:
**PCT/JP2014/001632**

(87) International publication number:
**WO 2014/156098 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2013 JP 2013070015**

(71) Applicant: **MT Carbon Co., Ltd.**
**Tokyo 100-8086 (JP)**

(72) Inventors:
• **YAGISHITA, Yohei**
**Tokyo 100-8086 (JP)**
• **YAMAGUCHI, Kohei**
**Otake-shi**
**Hiroshima 739-0652 (JP)**
• **KATAYAMA, Miwa**
**Otake-shi**
**Hiroshima 739-0652 (JP)**
• **ODA, Wataru**
**Otake-shi**
**Hiroshima 739-0652 (JP)**
• **INAMI, Akemi**
**Otake-shi**
**Hiroshima 739-0652 (JP)**
• **KUBO, Yoshiki**
**Otake-shi**
**Hiroshima 739-0652 (JP)**
• **OKAZAKI, Seiji**
**Otake-shi**
**Hiroshima 739-0652 (JP)**
• **SAKAMOTO, Akio**
**Tokyo 105-6123 (JP)**

(74) Representative: **Agasse, Stéphane et al**
**Cabinet GERMAIN & MAUREAU**
**B.P. 6153**
**69466 Lyon Cedex 06 (FR)**

(54) **AMORPHOUS CARBON MATERIAL AND GRAPHITE CARBON MATERIAL FOR NEGATIVE ELECTRODES OF LITHIUM ION SECONDARY BATTERIES, LITHIUM ION SECONDARY BATTERY USING SAME, AND METHOD FOR PRODUCING CARBON MATERIAL FOR NEGATIVE ELECTRODES OF LITHIUM ION SECONDARY BATTERIES**

(57)    This amorphous carbon material is used as a material for a negative electrode of a lithium-ion secondary battery. The material has a circularity of 0.7 to 0.9, both inclusive, a mean particle size of 1 μm to 30 μm, both inclusive, and a total content of transition metals of 700 ppm to 2500 ppm, both inclusive.

FIG.1

(a) WITH SURFACE TREATMENT (JUST AFTER TREATMENT)

(b) WITH SURFACE TREATMENT (AFTER CARBONIZATION)

(c) WITH SURFACE TREATMENT (AFTER GRAPHITIZATION)

EP 2 960 972 A1

**Description**

TECHNICAL FIELD

The present disclosure relates to carbon materials used for, e.g., negative electrodes of lithium-ion secondary batteries and methods for producing such materials.

BACKGROUND ART

Lithium-ion secondary batteries have lighter weight and higher capacities than conventional secondary batteries such as nickel cadmium batteries, nickel metal hydride batteries, and lead-acid batteries, and are thus practically used as drive power supplies for portable electronic devices such as cell phones and laptop computers.
Negative electrodes of lithium-ion secondary batteries are generally made of graphite-based carbon materials as carbon materials into/from which lithium ions can be inserted and released.
It is known that graphite-based materials have a problem that lithium ions and an electrolytic solution are simultaneously co-inserted into the graphite layers, resulting in decomposition of the electrolytic solution and separation of the graphite. In order to address such a problem, various improvements have been proposed such as a method of preferentially coating the edge of graphite with pitch (see Patent Document 1), and a method of mechanochemically treating a graphite precursor and then graphitizing the resultant to decrease the crystallinity of the surface relative to the crystallinity of the nucleus (see Patent Document 2).

CITATION LIST

PATENT DOCUMENT

PATENT DOCUMENT 1: Japanese Unexamined Patent Publication No. 2012-46419
PATENT DOCUMENT 2: Japanese Patent No. 4171259

SUMMARY OF THE INVENTION

TECHNICAL PROBLEM

In recent years, as a replacement for graphite materials exhibiting a flat discharge potential and a high capacity, amorphous-based carbon materials have been adopted more and more often in batteries for vehicles that requires an inclined discharge potential and inclined input and output characteristics.
The present inventors evaluated amorphous carbon materials obtained during the production process of the graphite materials described above. As a result, it was difficult to obtain amorphous carbon materials having sufficient initial efficiencies and packability.
According to a conventional method, it was also difficult to obtain graphite materials having well-balanced, high-level properties in terms of their initial efficiency, cycle characteristics, and increased density.
An object of the present invention is to provide negative electrodes of lithium-ion secondary batteries with carbon materials having such well-balanced, high-level properties in terms of their initial efficiency and cycle characteristics, and capable of having increased density.

SOLUTION TO THE PROBLEM

The present inventors perfected our invention by intensively studying how the amount of impurities included in raw materials and heat-treated products, and a change in particle shape through modification treatment on the surfaces of carbon materials would affect packability and battery characteristics.
Thus, an amorphous carbon material according to an embodiment of the present invention is used as a material for a negative electrode of a lithium-ion secondary battery. The amorphous carbon material has a circularity of 0.7 to 0.9, both inclusive, a mean particle size of 1 $\mu$m to 30 $\mu$m, both inclusive, and a total content of transition metals of 700 ppm to 2500 ppm, both inclusive.
Furthermore, a graphite carbon material obtained by graphitizing this amorphous carbon material is used for a negative electrode of a lithium-ion secondary battery, and has a circularity of 0.7 to 0.9, both inclusive and a mean particle size of 1 $\mu$m to 30 $\mu$m, both inclusive. In this material, a crystallite size Lc(006) calculated from a wide-angle X-ray diffraction line is from 20 nm to 27 nm, both inclusive, and Lc(006)/C0(006) defined as a value indicating the number of lithium insertion sites in a crystallite is from 30 to 40, both inclusive.

A method for producing a carbon material for a negative electrode of a lithium-ion secondary battery according to an embodiment of the present invention includes the steps of: pulverizing and classifying petroleum non-needle green coke having an optically isotropic structure ratio of 75% or more and a total content of transition metals of 1000 ppm to 2500 ppm, both inclusive; applying a compressive shearing stress to the petroleum non-needle green coke pulverized and classified to allow the petroleum non-needle green coke to have a circularity of 0.7 to 0.9, both inclusive; and carbonizing the petroleum non-needle green coke, to which the compressive shearing stress has been applied, at a temperature of 900°C to 1500°C, both inclusive, to produce an amorphous carbon material.

ADVANTAGES OF THE INVENTION

An amorphous carbon material according to an embodiment of the present invention allows for providing a lithium-ion secondary battery with a negative electrode having the ability to reduce the irreversible capacity of the battery and having a high packing density.

A graphite carbon material obtained by graphitizing this amorphous carbon material allows for providing a lithium-ion secondary battery with a negative electrode having excellent initial efficiency, input and output characteristics, and cycle characteristics, and also having a high energy density.

BRIEF DESCRIPTION OF THE DRAWINGS

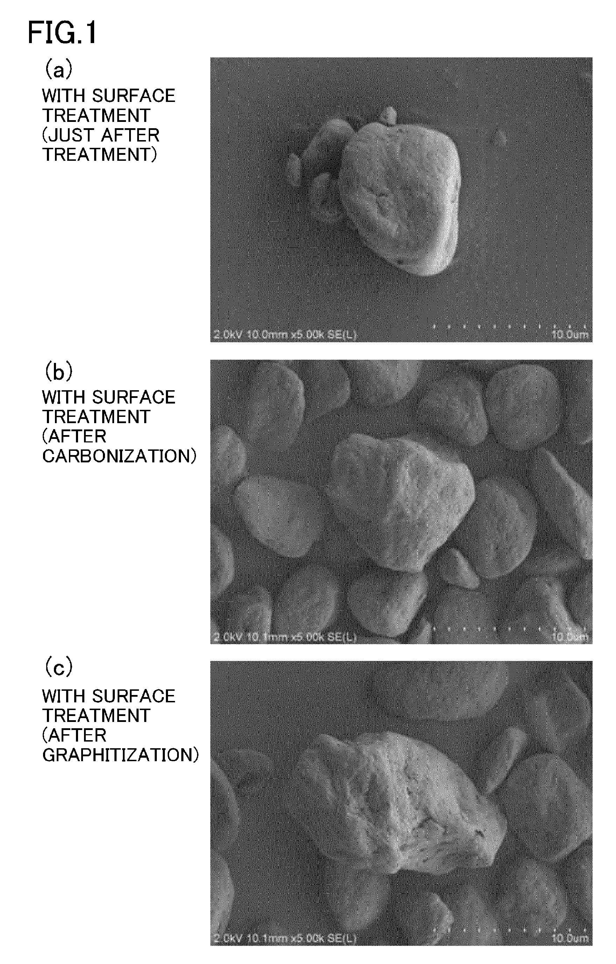

[FIG. 1] FIG. 1(a) is a scanning microscope image of a green coke that has just been subjected to a compressive shearing treatment (as a surface treatment) after having been pulverized and classified. FIG. 1(b) is a scanning microscope image of an amorphous carbon material obtained by carbonizing the green coke that has been subjected to the surface treatment. FIG. 1(c) is a scanning microscope image of a graphite carbon material obtained by graphitizing the amorphous carbon material shown in FIG. 1(b).

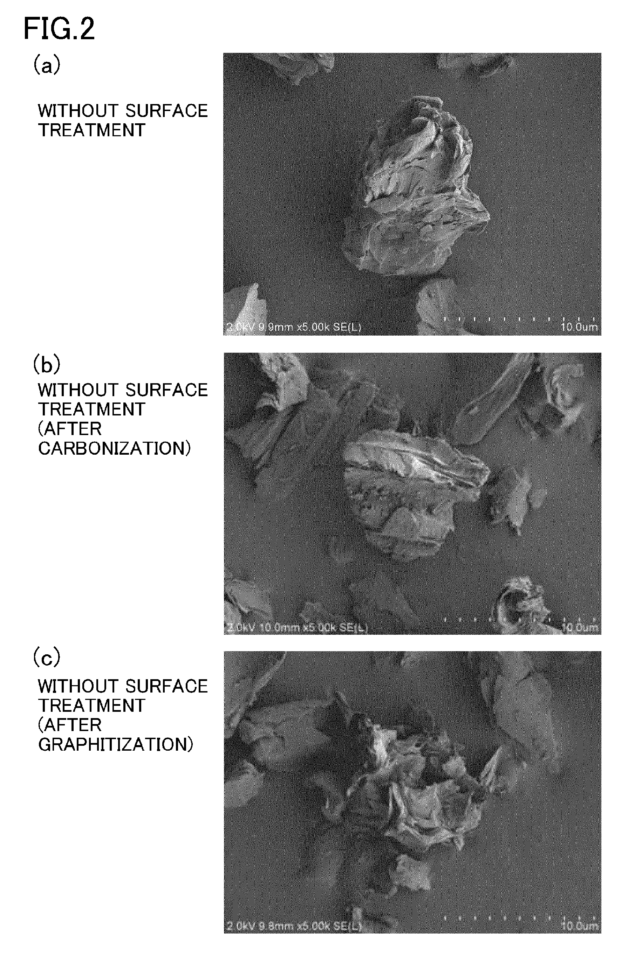

[FIG. 2] FIG. 2(a) is a scanning microscope image of a green coke that has not been subjected to any compressive shearing treatment yet after having been pulverized and classified. FIG. 2(b) is a scanning microscope image of an amorphous carbon material obtained by carbonizing the green coke shown in FIG. 2(a). FIG. 2(c) is a scanning microscope image of a graphite carbon material obtained by graphitizing the amorphous carbon material shown in FIG. 2(b).

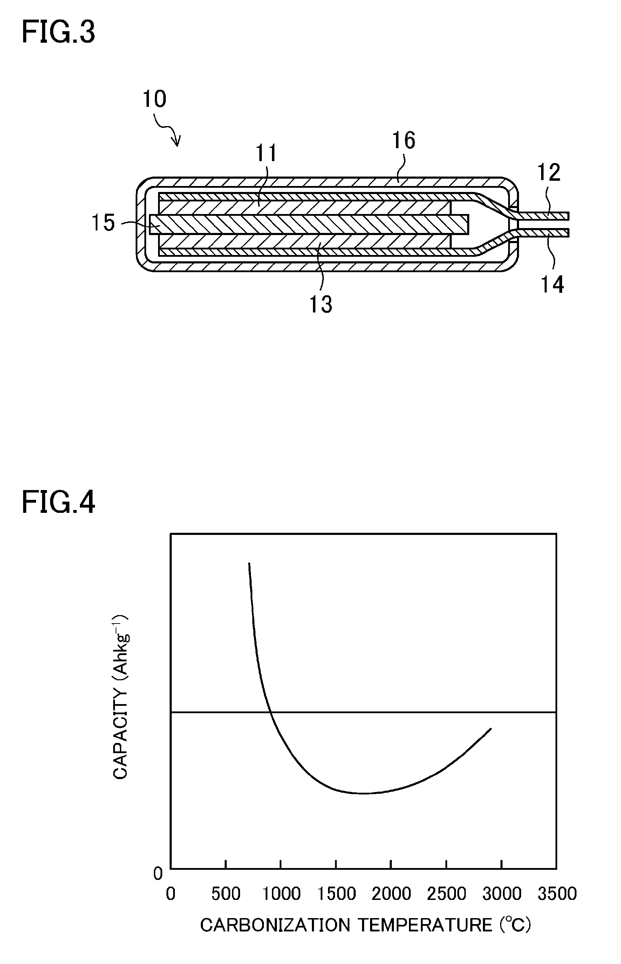

[FIG. 3] FIG. 3 illustrates an exemplary lithium-ion secondary battery including a negative electrode made of a carbon material according to an embodiment.

[FIG. 4] FIG. 4 is a graph schematically showing a relationship between the carbonization (and graphitization) temperature of a carbon material and a capacity when the carbon material is used as a material for the negative electrode.

DESCRIPTION OF EMBODIMENTS

An amorphous carbon material and a graphite carbon material, a method for producing such carbon materials, and lithium-ion secondary batteries using such carbon materials as negative electrodes according to the present invention will be described below. The following is merely a description of exemplary embodiments. For example, materials, the configurations of the materials or members, conditions for processing and thermal treatment may be changed and modified as appropriate without departing from the scope of the present invention.

Definition of Terms

"Circularity" as used herein refers to an index of roundness of, e.g., particles, and is calculated by the following equation (1):

$$(\text{Circularity}) = \{4 \times \pi \times (\text{area of projection plane})\}/\{(\text{perimeter length})^2\} \cdot \cdot \cdot (1)$$

"Carbonization process of coke" refers herein to a process of removing volatile matters (VMs) from the coke by thermal treatment. "Graphitization process" refers herein to a process of producing graphite carbon materials by changing the crystal structure of the carbon materials by thermal treatment.

Embodiment

Description of Carbon Materials

Carbon materials according to an embodiment of the present invention include an amorphous carbon material, and a graphite carbon material which is used as a material for a negative electrode of a lithium-ion secondary battery. Although the amorphous carbon material is an intermediate product obtained during the production process of the graphite carbon material, the amorphous carbon material may also be used by itself as a material for a negative electrode of a lithium-ion secondary battery. These carbon materials will be described in detail below.

The carbon materials according to this embodiment are different from a conventional carbon material in that the materials of this embodiment are produced using, as a raw material (precursor), a petroleum non-needle green coke having an optically isotropic structure ratio of at least 75%, and including a predetermined amount of impurities with a total content of transition metals of 1000 ppm to 2500 ppm, and a nitrogen content of 1 wt% to 4 wt%.

The green coke refers herein to a coke containing volatile matters and obtained by performing thermal decomposition and polycondensation by heating a heavy oil to a temperature of 300°C to 700°C using a coking facility such as a delayed coker. With a compressive shearing stress applied thereto, this green coke is carbonized and graphitized under a controlled thermal energy, thereby inducing a lattice strain falling with a predetermined range in the carbon materials.

The present inventors consider that there is the following relation between the lattice strain induced after the carbonization and graphitization and the optically isotropic structure ratio and the impurity content of the raw material.

The coke used as a precursor of the carbon materials according to this embodiment is a petroleum non-needle green coke. When observed through a polarizing microscope, a cross section of the coke has an evenly distributed optically isotropic structure at a ratio of 75% or more. A coke having an optically isotropic structure at a ratio of less than 75% is not suitable, because its crystallites have grown too unidirectionally and it is difficult to induce a lattice strain. It will be described in detail later how to calculate the optically isotropic structure ratio.

A high optically isotropic structure ratio means that the coke has a small optically anisotropic domain in which hexagonal carbon planes are stacked one upon the other in the green coke and around which the hexagonal carbon planes are not oriented unidirectionally. The boundary between the domains imposes a spatially limitation on the growth direction of crystallites during a process in which the hexagonal carbon planes grow through thermal treatment. The spatial limitation means that the growth of crystallites is hindered by the energy trying to maintain the configuration of the domain. Thus, it can be said that the lower the optically anisotropic structure ratio, that is, the smaller the sizes of domains and the more distant the domains are from each other, the greater the spatial limitation on the crystal growth.

As the thermal energy imparted to the material increases, however, the reaction proceeds so as to form a hexagonal carbon plane which is further stabilized at a higher temperature. Particularly when the temperature of the heat reaches a graphitization temperature exceeding 2900°C, the crystallite growth dominates in an easily graphitizable carbon material, thus making it difficult to keep the crystallites small enough only by the spatial hindrance to the growth due to the high optically isotropic structure ratio.

However, as in the embodiment to be described later, under a condition where impurities such as transition metals and porphyrin coexist, the crystallinity of the crystallites is improvable within a temperature range lower than a conventional range which is believed to be adopted for graphitization. This allows for reducing the size of crystallites. Thus, according to the graphite carbon material of this embodiment, the smaller size of each crystallite allows for improving the diffusion rate of lithium in the particles and thereby achieving high input and output characteristics with the capacity kept high enough thanks to the action of crystalline carbon.

In addition, since the hexagonal carbon planes are randomly oriented, the expansion and contraction directions of crystallites are distributed in various directions during charging and discharging. As a result, the particles are less deformed. Besides, the insertion and release paths of lithium are ensured in all directions. This allows for easily maintaining electrical contact between the particles and the lithium diffusion path even after repetitive charging and discharging, thus allowing for obtaining a graphite carbon material having excellent cycle characteristics.

Furthermore, according to the graphite carbon material of this embodiment, the lithium diffusion path tends to be maintained more easily than a material in which hexagonal carbon planes are oriented unidirectionally. This allows for producing the release reaction of lithium ions quickly even at the time of rapid charging and discharging. This rarely allows the observer to note the phenomenon that "at the time of rapid charging and discharging, the voltage of the battery either rises to over the upper limit, or falls to under the lower limit, too steeply for the release reaction of lithium ions to catch up with the rise or fall and to make the reaction proceed any further," which is a serious problem with a graphite carbon material.

It has been known that a petroleum non-needle coke contains, as crude-oil derived impurities, oil porphyrin or metal porphyrin in which transition metal ions such as nickel and vanadium are coordinated at the center of a porphyrin ring. The porphyrin as used herein has a porphyrin ring as a basic structure where four molecules of a five-membered pyrrole ring including nitrogen are annularly bonded, and includes compounds modified with, e.g., side chains.

If the metal porphyrin are heated in the green coke, a carbon-carbon bond is formed to allow for incorporating the porphyrin ring itself into the hexagonal carbon plane structure together with the transition metal ions coordinated. Since the metal porphyrin is heat stable to some extent, it is not decomposed at the carbonization temperature, and is left in the hexagonal carbon planes. Besides, it also serves as a catalyst when the hexagonal carbon planes are formed in its vicinity, thereby improving local crystallinity. This local change may cause strain inside particles of the carbon material or may allow for forming a crystal defect into which lithium is inserted.

The existence of the porphyrin ring itself imparts a large strain to the hexagonal carbon planes. Furthermore, the existence of the porphyrin ring and the transition metal ions coordinated in the porphyrin ring advantageously affects electronic states of the hexagonal carbon planes. Also, partial acceleration of crystallization of carbon causes an advantage such as removal of a functional group. Such advantages significantly improve not only initial efficiencies but also cycle characteristics. These advantages of the metal porphyrin can be obtained not only by a graphite carbon material but also by an amorphous carbon material.

The center of the porphyrin ring has a size enough to allow solvated lithium ions to pass therethrough easily. Thus, lithium ions can also move in a c-axis through this "pore," though they can move among only the interlayers originally. With this advantage, the carbon materials of this embodiment provide high diffusibility of lithium ions.

If the amorphous carbon material including this transition metal porphyrin is heated at a high temperature enough to cause graphitization, a porphyrin complex is thermally decomposed, and nitrogen is mostly volatilized. This weakens the force for keeping the transition metal inside the carbon materials to diffuse the transition metals, and components of the transition metals are volatilized in order of increasing boiling point. The defective portion of the porphyrin ring from which nitrogen has been removed may be kept since there is no free carbon to be substituted for this defective portion around this defective portion. The transition metals left without having been volatilized exist in the carbon layers (or defects on carbon planes), and may be irrelevant to the insertion/release reaction of lithium into/from the graphite layers.

The residue of the transition metal may serve as a pillar for preventing expansion and contraction of the interlayer distance in graphite, and preventing structural collapse. According to the method for producing the graphite carbon material of the embodiment, graphitization is performed at a relatively low temperature (e.g., from 2300° to 2900°C) at which all the metal components are not volatilized, and the metal components are intentionally left. Accordingly, a raw material containing transition metal porphyrin at a predetermined amount is selected, and is carbonized and graphitized while the thermal history is controlled. This allows for producing a carbon material distributed along the a-axis and the c-axis.

Unlike the conventional carbon materials, the carbon materials (the amorphous carbon material and the graphite carbon material) according to this embodiment are produced by applying a compressive shearing stress to a green coke whose particle size has been adjusted by pulverization and classification such that the circularity obtained by the above equation (1) is 0.7 or more and 0.9 or less. The circularity refers to an index indicating how close the profile of the projection image of the particle is to the perfect circle. As the perimeter length of the projection image increases with the perfect circle considered as the upper limit of 1, in other words, as the number of irregularities of the particle increases or the number of portions of the particle having an acute angle increases, the circularity to be obtained decreases.

In the shape processing (surface treatment) by a compressive shearing stress according to this embodiment, compression is preferentially applied to the long axis of the particle to round the acute angle portion, and smooth the irregularities on the surface of the particle. For example, this process refers to, if pulverized particles which are flat, squamous-shaped are used as a raw material, a treatment performed such that the particles have an oval shape with a large thickness from a side view and the irregularities on the pulverized surface are eliminated to form a gentle curved surface from a top view. The processing by this compressive shearing stress allows for reducing the specific surface area of the particles of the carbon materials.

If mechanical energy such as a compressive shearing stress is applied to the carbon materials, the mechanical energy is preferentially applied to the boundary between domains over the inside of the domain, and is absorbed therein. Thus, in a heat-treated product including a relatively few domain boundaries or a carbon material having a high optically isotropic structure ratio, an impact is directly transferred to the inside of the domain, and a crack tends to appear in a space between the carbon layers or in the inside of the hexagonal carbon planes. The portion around the crack that has appeared in the space between the carbon layers or in the inside of the hexagonal carbon planes is electrically unstable, and may cause a decomposition reaction of the electrolytic solution or a collapse of the particles. Therefore, the shape is preferably processed at the step of the green coke in order not to cause damage to the inside of the domain.

When the green coke receives the mechanical energy while heated at a temperature falling within a predetermined range, the green coke is moderately softened, and the shape can be easily changed, which is also an advantage of using the green coke. Furthermore, the shape is processed at the step of the green coke, thereby affecting disturbance of an array condition before development of the hexagonal carbon planes on the surfaces of the particles. Therefore, after the thermal treatment, a carbon material can be obtained on which a thin coated layer having a more amorphous periphery than the core is uniformly covered.

Next, the carbon materials according to this embodiment is different from those produced by the prior art in that the carbon materials according to this embodiment are graphitized by controlling its thermal history.

The graphitization temperature of the carbon materials according to this embodiment is 2300°C or more and 2900°C or less. In this temperature, the metal porphyrin derived transition metal included in the green coke as the impurities remains in the crystal, and the effect of graphitization catalyst is readily achieved.

As can be seen from the foregoing description, the carbon materials according to this embodiment can provide a negative electrode having a reduced irreversible capacity, a high energy density per area, a high diffusibility of lithium ions, and a high conductivity. The carbon materials according to this embodiment can also be used as a negative electrode of a lithium ion capacitor to provide a capacitor having a high output density and a high reliability.

Specific Configurations of Carbon Materials

In view of the forgoing description, specific configurations of the carbon materials according to this embodiment will be described, i.e., the configuration of an amorphous carbon material and the configuration of a graphite carbon material will be independently described.

(a) Configuration of Amorphous Carbon Material

FIG. 1(a) is a scanning microscope image of a green coke that has just been subjected to a compressive shearing treatment (i.e., surface treatment) after having been pulverized and classified. FIG. 1(b) is a scanning microscope image of an amorphous carbon material obtained by carbonizing the green coke that has been subjected to the surface treatment. FIG. 2(a) is a scanning microscope image of a green coke that has not been subjected to any compressive shearing treatment yet after having been pulverized and classified. FIG. 2(b) is a scanning microscope image of an amorphous carbon material obtained by carbonizing the green coke shown in FIG. 2(a).

The amorphous carbon material according to this embodiment of the present invention has a circularity of 0.7 to 0.9, and more preferably, 0.75 to 0.87. The circularity of the green coke serving as a raw material is approximately 0.6.

As is clear in comparison between FIGS. 1(a) and 1(b), and FIGS. 2(a) and 2(b), the amorphous carbon material of this embodiment receives the above compressive shearing stress to make the squamous surface rounded and to reduce the irregularities on the surface.

Since the circularity is from 0.7 to 0.9, use of this amorphous carbon material can improve the packing density and electrode density. If the circularity is less than 0.7, this increases an area where particles come into contact with one another to reduce the packing density and the electrode density. In contrast, if the circularity is more than 0.9, the particles are almost perfect spheres. Such particles are not preferable because the packing density does not increase sufficiently, and the area where particles come into contact with one another decreases. This advantage of improving, e.g., the packing density can be obtained not only when the amorphous carbon material of this embodiment is used for the material of a negative electrode of a lithium-ion secondary battery, but also when a graphite carbon material, produced from this amorphous carbon material as an intermediate material, is used for the material of the negative electrode.

The mean particle size (hereinafter also referred to as "D50") of the amorphous carbon material is preferably from 1 $\mu$m to 30 $\mu$m, more preferably from 3 $\mu$m to 30 $\mu$m, and still more preferably about 10 $\mu$m. If the mean particle size is less than 1 $\mu$m, this requires large energy to pulverize the coke, which is not practical. On the other hand, the mean particle size is 3 $\mu$m or more, this allows efficient pulverization using an existing pulverization facility. If the mean particle size exceeds 30 $\mu$m, it may be difficult to slurry the carbon material for producing the negative electrode. The amorphous carbon material does not contain particles having a size substantially exceeding 45 $\mu$m.

The amorphous carbon material of this embodiment contains the transition metal at a total content ranging from 700 ppm to 2500 ppm. That is because the coke used as a raw material has a total content of transition metals of about 1000 ppm to about 2500 ppm. The transition metals mainly include nickel and vanadium, for example.

The amorphous carbon material of this embodiment preferably has a total content of vanadium of 250 ppm or more.

In this manner, the amorphous carbon material of this embodiment contains the transition metals including vanadium. This allows for using this amorphous carbon material as an intermediate material of the graphite carbon material having high input and output characteristics and an excellent cycle characteristics.

In general, an initial discharge ratio and initial efficiency are lower in an amorphous carbon material than in a graphite carbon material. However, a crystallinity is lower in the amorphous carbon material than in the graphite carbon material. Therefore, a cycle retention ratio is higher in the amorphous carbon material than in the graphite carbon material. Thus, the amorphous carbon material of this embodiment is preferably used as a material of negative electrodes of batteries, such as lithium-ion secondary batteries for hybrid vehicles, having a relatively small capacity and frequently performing rapid charging and discharging.

(b) Configuration of Graphite Carbon Material

FIG. 1(c) is a scanning microscope image of a graphite carbon material obtained by graphitizing the amorphous carbon material shown in FIG. 1(b). FIG. 2(c) is a scanning microscope image of a graphite carbon material obtained by graphitizing the amorphous carbon material shown in FIG. 2(b).

As can be seen from FIG. 1(c), in the graphite carbon material according to this embodiment, the circularity of the green coke particles serving as a raw material is from 0.7 to 0.9, and more preferably from 0.75 to 0.87. Thus, when the graphite carbon material of this embodiment is used as a materials of negative electrodes of lithium-ion secondary batteries, packing density and electrode density can be improved.

The mean particle size of the graphite carbon material is preferably from 1 $\mu$m to 30 $\mu$m, more preferably from 3 $\mu$m to 30 $\mu$m, and still more preferably 10$\mu$m. As shown in FIGS. 1(a) and 1(b), and FIG. 2(a) and 2(b), the circularity and the mean particle size hardly vary before and after graphitization.

Furthermore, a crystallite size Lc(006) of the graphite carbon material of this embodiment calculated from a wide-angle X-ray diffraction line is from 20 nm to 27 nm. Lc(006)/C0(006) defined as a value indicating the number of lithium insertion sites in the crystallite is from 30 to 40. In this manner, applying a compressive shearing stress to the green coke serving as a raw material allows for reducing the crystallite size.

According to this configuration, compared to a case of including larger particles, the use of the graphite carbon material as a material of the negative electrode allows for not only reducing decomposition of the electrolytic solution due to the simultaneous co-insertion of lithium ions and the solution, but also improving the lithium diffusion rate in the particles. As a result, high input and output characteristics can be achieved with the capacity kept high enough thanks to the action of crystalline carbon.

The graphite carbon material of this embodiment has a total content of transition metals of 100 ppm to 2500 ppm, and more preferably 200 ppm to 2400 ppm. Most of the transition metals left in the graphite carbon material is vanadium at a content of 100 ppm or more (2500 ppm or less). It is preferable to contain 250 ppm or more of vanadium.

In this manner, the transition metal such as vanadium is left in the material. This allows for preventing expansion and contraction of the interval between the graphite layers when lithium is inserted into and released from the graphite layers.

The above-described graphite carbon material is used as a material for negative electrodes of lithium-ion secondary batteries for various devices or a material for negative electrodes of lithium ion capacitors. In general, the initial discharge ratio and initial efficiency are higher in a graphite carbon material than in an amorphous carbon material, and the capacity of the battery using the graphite carbon material is larger than that of the battery using the amorphous carbon material. Accordingly, the graphite carbon material of this embodiment is preferably used as a material of negative electrodes of batteries requiring a large capacity, such as lithium-ion secondary batteries for electric vehicles (EV).

Configuration of Lithium-Ion Secondary Battery

FIG. 3 illustrates an exemplary lithium-ion secondary battery including a negative electrode made of the carbon material according to this embodiment.

As illustrated in this drawing, a lithium-ion secondary battery 10 according to this embodiment includes a negative electrode 11, a negative electrode current collector 12, a positive electrode 13, a positive electrode current collector 14, a separator 15 interposed between the negative electrode 11 and the positive electrode 13, and a package 16 comprised of, e.g., an aluminum laminate film.

The negative electrode 11 is formed by applying the above-described graphite material of this embodiment to one surface or both surfaces of, for example, metal foil. The mean particle size and the circularity of the applied graphite material are not changed much before and after the steps of producing the battery. The mean particle size falls within the range from 1 $\mu$m to 30 $\mu$m, and the circularity is 0.7 to 0.9. Generally used shapes and materials are employed for the members such as the negative electrode current collector 12, the positive electrode 13, the positive electrode current collector 14, the separator 15, and the package 16, except the negative electrode 11.

The lithium-ion secondary battery according to this embodiment includes the negative electrode to which the above-described carbon material is applied. Thus, this lithium-ion secondary battery has a high energy density, a reduced irreversible capacity, and excellent cycle characteristics.

This configuration is one example of the lithium-ion secondary battery, and, e.g., the shape of the respective members, the number of the electrodes, and its size may be changed as appropriate.

Method for Producing Carbon Material

Next, a method for producing the carbon materials according to this embodiment will be described.

(a) Production of Amorphous Carbon Materials

A petroleum non-needle green coke is used as a raw material. When observed through a polarizing microscope, a cross section of the coke has an evenly distributed optically isotropic structure at a ratio of 75% of higher, and more preferably 85% or higher. The coke has a total content of transition metals of 1000 ppm to 2500 ppm and has, e.g., a nitrogen content ranges from 1 wt% to 4 wt%. Such a petroleum non-needle green coke is used.

A coke containing an optically isotropic structure ratio of less than 75% is not suitable as a raw material of the carbon material according to this embodiment, since the optical anisotropic domain is large and the crystallites grow too unidirectionally in thermal treatment.

This petroleum non-needle green coke is pulverized using a mechanical pulverizer such as a Super Rotor Mill (produced by Nisshin Engineering Inc.) or a Jet Mill (produced by Nippon Pneumatic Mfg. Co., Ltd.). As described above, in the coke, since the boundaries between the domains, exposed as a main fracture surface, are randomly oriented, the coke after the pulverization has a smaller aspect ratio than pulverized needle coke.

The mean particle size (D50) after the pulverization is 1 $\mu$m to 30 $\mu$m. The mean particle size is based on the measurement with a laser diffraction particle size distribution analyzer. D50 that is less than 1 $\mu$m is not practical since a large amount of pulverization energy is required. D50 that is more than 30 $\mu$m is also not preferable, since no particles having an appropriate size are obtained as the material for negative electrodes of lithium-ion secondary batteries.

The product that has been pulverized can be classified, too. Examples of a classification apparatus include precision air classifiers such as Turbo Classifier (produced by Nisshin Engineering Inc.), Elbow-Jet (produced by Nittetsu Mining Co., Ltd.), and Classiel (produced by Seishin Enterprise Co., Ltd.). The classification can be performed as appropriate, i.e., not only after pulverization but also after a shape processing or a thermal treatment. The classification may be performed under a condition such that circularity distribution necessary to subsequent steps can be obtained.

Subsequently, a compressive stress and shearing stress are applied to the green coke powder, i.e., the shape processing (surface treatment) is performed. Any apparatuses capable of simultaneously applying stresses, such as a shearing stress, a compressive stress, and a collision stress, to the coke may be used. Its configuration and principle of operation are not particularly limited. Examples of the apparatus include a ball-type kneading machine such as a rotary ball mill, a wheel-type kneading machine such as an edge runner, Hybridization System (produced by Nara Machinery Co., Ltd.), Mechanofusion (produced by Hosokawa Micron Lid.), Nobilta (produced by Hosokawa Micron Lid.), and COMPOSI (produced by Nippon Coke & Enginieering Co., Ltd.). In particular, it is preferable to use an apparatus having a configuration where a consolidation stress and a compressive stress are applied to the powder particles in a gap between a rotating blade and a housing. If the powder particles are processed such that the temperature applied to the powder particles is 60°C to 300°C, moderate adhesiveness by a volatilizing component contained in the green coke is produced, and the sharpened portion immediately adheres to the particles, thereby accelerating the shape change.

The powder particles processed by the compressive shearing stress have a circularity of more than 0.7 and 0.9 or less since the particles of the green coke used as a raw material have a circularity of about 0.6. The circularity of the powder particles are preferably 0.75 to 0.87. The particles that have been processed so as to have a circularity of more than 0.9 are almost the perfect spheres. Thus, such particles are not preferable because the packing density does not increase sufficiently, and the particles are less in contact with one another. In particular, the circularity of the particles preferably falls within the range from 0.75 to 0.85.

The carbonization method is not particularly limited. An example of the carbonization method includes a method of a thermal treatment under an inert gas atmosphere, such as nitrogen or argon, until the highest temperature of 900°C to 1500°C, the treatment being retained for hours ranging from more than 0 to 10 or less after reaching the highest temperature.

At the temperature of less than 900°C, the irreversible capacity increases too much due to, e.g., light hydrocarbons remaining in the coke and functional groups.

FIG. 4 is a graph schematically showing a relationship between the carbonization (and graphitization) temperature of the carbon material and a capacity when the carbon material is used as a material for the negative electrode. As shown in the drawing, in the carbonization and graphitization of the various carbon raw materials including the coke, the capacity is lowest when the treatment is performed at the temperature of 1500°C to 2000°C, particularly 1800°C to 2000°C, though there are some differences depending on the condition. Thus, the upper limit of the carbonization temperature is set to 1500°C in this embodiment.

If the amorphous carbon material of this embodiment is used as a material of a negative electrode without any treatment, the carbonization temperature is preferably 1000°C to 1500°C. That is because the carbonization at a temperature of 900°C or more and less than 1000°C causes an increase in irreversible capacity due to a residue such as light hydrocarbons when the amorphous carbon material is used as the material of the negative electrode without any treatment, though it does not pose a problem due to the effect by, e.g., light hydrocarbons if the amorphous carbon material is graphitized later.

With respect to processing after the thermal treatment, mild crushing for cancelling aggregation might not be a problem. However, severe pulverization producing new crushing faces is not preferable since it impairs advantages of the previous shape processing.

As can be seen from the foregoing description, the above-described amorphous carbon material can be obtained.

(b) Production of Graphite Carbon Material

A graphite carbon material is obtained by graphitizing the amorphous carbon material using the following method.

Known apparatuses such as acheson furnaces, direct electrical heating furnaces can be used in the graphitization step.

In these furnaces, fillings called breezes are placed between products to conduct electricity, thereby hardly controlling the temperature. In such a furnace, the temperatures are significantly different from portion to portion. Since controlling the thermal history is important to produce the graphite carbon material of this embodiment, a batch furnace or a continuous furnace is preferably used, in which the temperature is controllable.

The thermal treatment is performed under a non-oxidizing atmosphere at a temperature of 2300°C to 2900°C. If the temperature is less than 2300°C, the graphitize is not sufficiently performed since a catalytic effect of the transition metals is hardly caused. If the temperature exceeds 2900°C, the transition metal is removed from the crystallite to make it impossible to utilize the characteristics of the raw material. Such temperature ranges are not suitable for this step. The temperature rising rate for the thermal treatment do not largely influence the performance, as long as it falls within the range from the minimum temperature rising rate to the maximum temperature rising rate in known apparatuses. In view of temperature variations in the furnace, the especially preferable graphitize temperature is 2400°C to 2800°C.

As well as the carbonization, with respect to processing the graphitized product, mild crushing for cancelling aggregation may not be a problem. However, severe pulverization producing new crushing faces is not preferable since it impairs advantages of the previous shape processing.

As can be seen from the foregoing, the above-described graphite carbon material can be obtained.

Examples

The invention according to the present application will be described below in detail based on examples and comparative examples. The present invention is however not limited to the following examples.

Explanation of Measurement Method

(a) Measurement of Optically Isotropic Structure Ratio in Raw Material

A small amount of an observation sample was placed on the bottom of a plastic sample container. Mixture of cold mounting resin (Product Name: Cold Mounting Resin #105, Manufacturer: Japan Composite Co., Ltd.) and a curing agent (Product Name: Curing Agent (Agent M), Manufacturer: NOF CORPORATION) was slowly poured into the sample container, and stands to be solidified. Next, the solidified sample was taken out of the container. The surface to be measured was polished using a polisher with a rotatable polishing plate. The polishing was made to press the polished surface onto the rotating surface of the polishing plate. The polishing plate rotated at 1000 rpm. The polishing was performed in the order of grit sizes #500, #1000, and #2000 of the polishing plate. At the end, alumina (Product Name: Baikalox Type 0.3CR, Particle Size: 0.3 $\mu$m, Manufacturer: Baikowski) was used to perform mirror polishing. The polished sample was observed using a polarizing microscope (produced by Nikon Corporation) with 500 magnification at each of observation angles 0 and 45 degrees. Respective images observed by the polarizing microscope were taken into a digital microscope VHX-2000 produced by Keyence.

In each of the two taken observation images, a square region (a 100 $\mu$ square) was cut out from a same point. All particles within that region were analyzed as follows to obtain a mean value.

The color of the optical anisotropic domain changes depending on the orientations of the crystallites. On the other hand, the color of the optically isotropic domain is always the same. Using these characteristics, the portion whose color is unchanged was extracted as a binarized image, and the area ratio of the optically isotropic portion was calculated. In the binarization, the portions with thresholds ranging from 0 to 34 and from 239 to 255 were colored pure magenta. Black portions were vacancies.

(b) Measurement of Transition Metal Content in Raw Material

Quantitative analysis of a coke serving as a raw material was conducted using a Hitachi Ratio Beam Spectrophotometer U-5100 based on emission spectral analysis.

(c) Measurement of Nitrogen Content in Raw Material

The content of nitrogen in the raw material was analyzed under JIS M8813 (i.e., by a semi-micro Kjeldahl method).

(d) Measurement of Transition Metal Content in Carbon Material

A SPS-5000 model inductively coupled plasma atomic emission spectrometry (produced by Seiko Instruments Ltd.) was used for quantitative analysis of the transition metals such as vanadium contained in the sample by inductively coupled plasma emission spectrometry (ICP).

(e) Measurement of Nitrogen Content in Carbon Material

Quantitative analysis of the content of nitrogen in the carbon material was made using TC-600 (LECO corporation) by an inert gas flow fusion-thermal conductivity method.

(f) Measurement of Circularity

A sheet in which particles are dispersed and fixed such that the particles are not stacked and flat surfaces of flat particles of the particles are disposed in parallel to the sheet was captured by a scanning electron microscope (S-4800 produced by Hitachi High-Technologies Corporation), and the image was analyzed using A-zou kun (produced by Asahi Kasei Engineering Corporation). In these examples, the mean circularity of 300 particles was the circularity of the sample.

(g) Measurement of Crystallite Sizes and Lattice Constant

An Si standard sample was, as an internal standard, mixed to the graphite powder at 10 mass%. The mixed sample was put into a glass sample holder (diameter 25 mm $\times$ thickness 0.2 mm) and measured by wide-angle X-ray diffraction specified by the 117 Committee of the Japan Society for the Promotion of Science (Carbon 2006, No. 221, pages 52-60). Then, the crystallite sizes Lc(006) and Lc(112) of the graphite powder were calculated. RINT produced by Rigaku Corporation was used as an X-ray diffraction device. A CuK$\alpha$ ray (a K$\beta$ filter monochromator) was used as an X-ray source. A voltage of 40 kV and a current of 40 mA were applied to an X-ray tube.

With respect to the obtained diffraction pattern, measurement data was smoothed and the background was eliminated. Then, the processed data was subjected to absorption correction, polarization correction, and Lorentz correction. Furthermore, the (006) diffraction line and the (112) diffraction line of the graphite powder were corrected using the peak position and the value width of the (422) diffraction line of the Si standard sample to calculate the crystallite size and the lattice constant. The crystallite size was calculated from the half value width at the correction peak using the following Scherrer equation (equation (2)). The lattice constant was calculated from the spacing d(006) obtained by using the following equation, which is variation of the Bragg equation. C0(006) can be calculated by multiplying d(006) by 6. The obtained diffraction pattern was measured and analyzed five times. The averages of the five times were Lc(006), Lc(112), and C0(006).

$$\text{The Scherrer Equation is } L = K \times \lambda/(\beta_0 \times \cos\theta_B) \cdots (2)$$

where L is a crystal size (nm),
K is a form factor constant (= 1.0),
$\lambda$ is the wavelength of the X ray (= 0.15406 nm),
$\theta_B$ is the Bragg angle, and
$\beta_0$ is a half value width (correction value).

$$\text{Variation of the Bragg equation is } d = \lambda/(2\sin\theta) \cdots (3)$$

where d is spacing (nm),

$\lambda$ is the wavelength of the CuK$\alpha$ ray used for the measurement (= 0.15418 nm), and

$\theta$ is the diffraction angle (correction value).

(h) Measurement of Mean Particle Size

Measurement was performed using a laser diffraction/scattering particle size distribution measuring apparatus LMS-2000e (produced by Seishin Enterprise Co., Ltd.).

(i) Production of Battery for Half Cell Analysis and Evaluation Test

Assembly cells were used for unipolar analysis of the battery.

Preparation of Paste for Producing Electrode Sheet

Zero point one part by mass of KF polymer L1320 (a N-methyl pyrrolidone (NMP) solution containing 12 mass% of polyvinylidene fluoride (PVDF)) manufactured by KUREHA CORPORATION was added to 1 part by mass of carbon materials particles, and kneaded by a planetary mixer to obtain a main undiluted solution.

Production of Electrode Sheet

After NMP is added to the main undiluted solution and the viscosity is adjusted, the main undiluted solution was applied onto high purity copper foil using a doctor blade to a thickness of 75 $\mu$m. After the applied sheet was dried, the copper foil coated with the solution was pressed onto the electrode using a small-size roll press at a pressure ranging from $1 \times 10^3$ kg/cm to $3 \times 10^3$ kg/cm. The electrode was further dried in vacuum at 120°C for one hour and cut into an assembly cell of 18 mm$\phi$, or a laminate cell.

Production of Assembly Cell

The assembly cell was produced as follows. The following operation was performed under a dry argon atmosphere at a dew point of -80°C or lower.

Inside a polypropylene cell (with an inner diameter of 18 mm) with a threaded cover, the carbon electrode and metal lithium foil are stacked one on another with a separator (e.g., a polypropylene microporous film (Celgard 2400)) interposed therebetween. An electrolytic solution is added to the multilayer to form a test cell. The electrolytic solution is produced by mixing ethylene carbonate (EC) and ethylmethyl carbonate (EMC) at a ratio of 3:7 to obtain a solvent and then dissolving LiPF$_6$ as an electrolyte in the solvent at a concentration of 1 mol/l.

Unipolar Charge and Discharge Test

The batteries were charged at a constant current (CC) of 0.2 C up to 10 mV. When the current decreases to 0.05 C, the charge ends. The batteries were discharged at a constant current (CC) of 0.2 C and the discharge was cut off at 2.5 V.

(j) Production of Battery for Full Cell Analysis and Analysis Test

Laminated full cells (each including a positive electrode made of a commercially available ternary material and a negative electrode according to the examples and comparative examples of the present application) were used for charging and discharging cycle analysis.

Preparation of Paste for Producing Electrode Sheet

The paste of the negative electrode was prepared as in the unipolar analysis. The paste of the positive electrode was prepared as follows.

KF polymer L1320 including PVDF and a conductive agent (DENKA BLACK produced by DENKI KAGAKU KOGYOU KABUSHIKI KAISYA) were added to the commercially available ternary material for the positive electrode. The amounts of the PVDF and the conductive agent in the added KF polymer L1320 were 4 parts by mass and 3 parts by mass, respectively, relative to 100 parts by mass of the ternary material. Then, the material was kneaded by a planetary mixer to obtain a main undiluted solution.

Production of Electrode Sheet

After NMP was added to the main undiluted solution and the viscosity is adjusted, the main undiluted solution was applied onto high purity copper foil using a doctor blade to a thickness of 75 $\mu$m. The copper foil coated with the solution was pressed by a small-size roll press at a pressure such that the electrode density was 2.8 g/cc. Furthermore, this sample was dried in vacuum at 120°C for one hour and cut into a predetermined size using a punching die for full cell electrodes.

Production of Full Cell

In a dry room controlled at a dew point of -40°C, tab leads were welded using an ultrasonic welding machine to the terminals of the positive electrode and the negative electrode cut for a laminate cell. After the electrodes and the separator were placed inside the laminate film, and the sides of the film except the inlet for the electrolytic solution were sealed, the electrolytic solution was immersed in vacuum. After that, the last unsealed one side was sealed to assemble the laminate cell.

Full Cell Cycle Test

Inside a thermostatic tank at 60°C, CC charge at 1 C up to 4.1 V and CC discharge at 1 C up to 2.7 V were repeated for 300 cycles.

Production of Carbon Materials for Examples and Comparative Examples

Coke A, which is a petroleum non-needle coke, and coke B, which is a petroleum needle coke, were used as the raw material cokes of the following examples and comparative examples. Table 1 shows the optically isotropic structure ratio, the transition metal content, and the vanadium content in each of cokes A and B. All of the transition metal content, the vanadium content, and the nitrogen content are far larger in coke A than in coke B.

Table 1

| Coke | Optically Isotropic Structure Ratio (%) | Transition Metal Content (ppm) | Vanadium Content (%) | Nitrogen Content (wt%) |
|---|---|---|---|---|
| A | 90 | 1546 | 507 | 1.46 |
| B | 10 | 140 | 3 | 0.1 |

Examples 1-4

Cokes A according to examples 1-4 were pulverized and classified to have D50 of 10 $\mu$m, and were subjected to surface treatment (application of a compressive shearing stress) to have a circularity of 0.70, 0.82, 0.88 or 0.90, respectively. Thereafter, the resultants were subjected to thermal treatment at 1400°C to obtain amorphous carbon materials. Powder physical properties and the above described unit battery characteristics (electrode density, initial discharge, and initial efficiency) in the respective samples were measured. Regarding the respective samples of examples 2, 3, and 4, full cell cycle characteristics (cycle retention ratio) were also measured.

Examples 5-7

The samples of example 2 according to examples 5-7 were subjected to thermal treatment at 2400°C, 2800°C, and 2600°C, respectively, to obtain graphite carbon materials. Powder physical properties and the above described unit battery characteristics in the respective samples were measured. Regarding the respective samples of examples 5 and 6, full cell cycle characteristics were also measured.

Example 8

The sample of example 1 was subjected to thermal treatment at 2600°C to obtain a graphite carbon material. Powder physical properties and unit battery characteristics in this sample were measured.

Example 9

The sample of example 3 was subjected to thermal treatment at 2600°C to obtain a graphite carbon material. Powder physical properties and unit battery characteristics in this sample were measured.

Example 10

The sample of example 4 was subjected to thermal treatment at 2600°C to obtain a graphite carbon material. Powder physical properties and unit battery characteristics in this sample were measured.

Comparative Example 1

Coke A was pulverized and classified to have D50 of 10 $\mu$m, and was subjected to thermal treatment at 1400°C without surface treatment to obtain an amorphous carbon material. Powder physical properties, unit battery characteristics, and full cell cycle characteristics in this sample were measured.

Comparative Example 2

Coke A was pulverized and classified to have D50 of 10 $\mu$m, and was subjected to surface treatment to have a circularity of 0.92. Thereafter, coke A was subjected to thermal treatment at 1400°C to obtain an amorphous carbon material. Powder physical properties, unit battery characteristics, and full cell cycle characteristics in this sample were measured.

Comparative Example 3

Coke B was pulverized and classified to have D50 of 10 $\mu$m, and was subjected to thermal treatment at 1400°C without surface treatment to obtain an amorphous carbon material. Powder physical properties, unit battery characteristics, and full cell cycle characteristics in this sample were measured.

Comparative Examples 4 and 5

Cokes B according to comparative examples 4 and 5 were pulverized and classified to have D50 of 10 $\mu$m, and were subjected to surface treatment to have a circularity of 0.70 and 0.90, respectively. Thereafter, the resultants were subjected to thermal treatment at 1400°C to obtain amorphous carbon materials. Powder physical properties and unit battery characteristics in the respective samples were measured.

Comparative Example 6

The sample of example 2 was subjected to thermal treatment at 2250°C to obtain a graphite carbon material. Powder physical properties, unit battery characteristics, and full cell cycle characteristics in this sample were measured.

Comparative Examples 7 and 8

The samples of comparative example 1 according to comparative examples 7 and 8 were subjected to thermal treatment at 2800°C and 3000°C, respectively, to obtain graphite carbon materials. Powder physical properties, unit battery characteristics, and full cell cycle characteristics in the respective samples were measured.

Comparative Example 9

The sample of comparative example 2 was subjected to thermal treatment at 2800°C to obtain a graphite carbon material. Powder physical properties, unit battery characteristics, and full cell cycle characteristics in this sample were measured.

Comparative Example 10

The sample of comparative example 3 was subjected to thermal treatment at 2400°C to obtain a graphite carbon material. Powder physical properties, unit battery characteristics, and full cell cycle characteristics in this sample were measured.

Comparative Examples 11 and 12

The samples of comparative example 4 and 5 were subjected to thermal treatment at 2600°C to obtain graphite carbon materials. Powder physical properties, and unit battery characteristics in the respective samples were measured.

Test Result and Observation

Table 2 shows the powder physical properties of the amorphous carbon materials in examples 1-4 and comparative examples 1-5. Table 3 shows battery characteristics of these samples.

Table 2

| | Raw Material | Mean Particle Size ($\mu$m) | Thermal Treatment Temperature (°C) | Circularity | Transition Metals in Carbon Material (ppm) | Vanadium Content in Carbon Material (ppm) |
|---|---|---|---|---|---|---|
| Example 1 | Coke A | 10 | 1400 | 0.70 | 1538 | 498 |
| Example 2 | Coke A | 10 | 1400 | 0.82 | 1538 | 498 |
| Example 3 | Coke A | 10 | 1400 | 0.88 | 1545 | 502 |
| Example 4 | Coke A | 10 | 1400 | 0.90 | 1548 | 507 |
| Comparative Example 1 | Coke A | 10 | 1400 | 0.65 | 1532 | 498 |
| Comparative Example 2 | Coke A | 10 | 1400 | 0.92 | 1545 | 510 |
| Comparative Example 3 | Coke B | 10 | 1400 | 0.63 | 140 | 3 |
| Comparative Example 4 | Coke B | 10 | 1400 | 0.70 | 140 | 3 |
| Comparative Example 5 | Coke B | 10 | 1400 | 0.90 | 140 | 3 |

Table 3

| | Electrode Density (g/cm$^3$) | Initial Discharge (mAh/g) | Initial Efficiency (%) | Retention After 300 Cycles at 60°C (%) |
|---|---|---|---|---|
| Example 1 | 1.30 | 240 | 81 | - |
| Example 2 | 1.33 | 240 | 82 | 90 |
| Example 3 | 1.34 | 237 | 82 | 88 |
| Example 4 | 1.34 | 235 | 81 | 86 |
| Comparative Example 1 | 1.22 | 258 | 70 | 82 |
| Comparative Example 2 | 1.32 | 230 | 80 | 35 |

(continued)

|  | Electrode Density (g/cm³) | Initial Discharge (mAh/g) | Initial Efficiency (%) | Retention After 300 Cycles at 60°C (%) |
|---|---|---|---|---|
| Comparative Example 3 | 1.19 | 233 | 86 | 77 |
| Comparative Example 4 | 1.23 | 218 | 89 | - |
| Comparative Example 5 | 1.47 | 221 | 87 | - |

Table 4 shows the powder physical properties of the graphite carbon materials in examples 5-10 and comparative examples 6-12. Table 5 shows battery characteristics of these samples.

Table 4

| | Raw Material | Mean Particle Size ($\mu$m) | Thermal Treatment Temperature (°C) | Circularity | Lc(006) (nm) | C0(006) | Lc(006)/ C0(006) | Transition Metal Content (ppm) | Vanadium Content (ppm) |
|---|---|---|---|---|---|---|---|---|---|
| Example 5 | Coke A | 10 | 2400 | 0.82 | 20 | 0.6750 | 30 | 512 | 483 |
| Example 6 | Coke A | 10 | 2800 | 0.82 | 26 | 0.6738 | 39 | 508 | 480 |
| Example 7 | Coke A | 10 | 2600 | 0.82 | 22 | 0.6744 | 33 | 510 | 480 |
| Example 8 | Coke A | 10 | 2600 | 0.70 | 23 | 0.6742 | 34 | 510 | 480 |
| Example 9 | Coke A | 10 | 2600 | 0.88 | 21 | 0.6745 | 31 | 510 | 481 |
| Example 10 | Coke A | 10 | 2600 | 0.90 | 21 | 0.6746 | 31 | 511 | 481 |
| Comparative Example 6 | Coke A | 10 | 2250 | 0.82 | 16 | 0.6754 | 24 | 530 | 498 |
| Comparative Example 7 | Coke A | 10 | 2800 | 0.64 | 38 | 0.6732 | 56 | 490 | 450 |
| Comparative Example 8 | Coke A | 10 | 3000 | 0.64 | 50 | 0.6728 | 74 | 90 | 72 |
| Comparative Example 9 | Coke A | 10 | 2800 | 0.92 | 24 | 0.6942 | 35 | 508 | 480 |
| Comparative Example 10 | Coke B | 10 | 2400 | 0.62 | 69 | 0.6741 | 102 | 10 | 3 |
| Comparative Example 11 | Coke B | 10 | 2600 | 0.70 | 86 | 0.6735 | 128 | 10 | 3 |
| Comparative Example 12 | Coke B | 10 | 2600 | 0.90 | 68 | 0.6745 | 101 | 10 | 3 |

Table 5

| | Electrode Density (g/cm$^3$) | Initial Discharge (mAh/g) | Initial Efficiency (%) | Retention After 300 Cycles at 60°C (%) |
|---|---|---|---|---|
| Example 5 | 1.39 | 291 | 96 | 87 |
| Example 6 | 1.39 | 314 | 96 | 85 |
| Example 7 | 1.39 | 299 | 95 | - |
| Example 8 | 1.34 | 305 | 95 | - |
| Example 9 | 1.40 | 298 | 95 | - |
| Example 10 | 1.41 | 295 | 95 | - |
| Comparative Example 6 | 1.39 | 270 | 96 | 87 |
| Comparative Example 7 | 1.28 | 328 | 95 | 80 |
| Comparative Example 8 | 1.28 | 330 | 80 | 66 |
| Comparative Example 9 | 1.37 | 260 | 90 | - |
| Comparative Example 10 | 1.26 | 310 | 96 | 81 |
| Comparative Example 11 | 1.27 | 329 | 91 | - |
| Comparative Example 12 | 1.40 | 307 | 92 | - |

The amorphous carbon materials in examples 1-4 had circularities of 0.70, 0.82, 0.88, and 0.90, respectively, and the electrode densities of 1.30, 1.33, 1.34, and 1.34 (g/cm$^3$), respectively. Besides, the amorphous carbon materials in examples 1-4 had initial discharge capacities of 240, 240, 237, and 235 (mAh/g), respectively, and initial efficiencies of 81%, 82%, 82%, and 81%, respectively. The capacity retentions of the amorphous carbon materials in examples 1-4 after 300 cycles at 60°C were unmeasured, 90%, 88%, and 86%, respectively, which means that they had high cycle characteristics.

On the other hand, the amorphous carbon material in comparative example 1 had a circularity of 0.65, an electrode density of 1.22 g/cm$^3$, which decreased by about 9% compared to the examples, and an initial efficiency of 70%. That may be because no surface treatment was performed and the electrode density thus did not increase. Besides, that may also because the surface activity was so high that the initial efficiency decreased. The capacity retention in this example after 300 cycles at 60°C was 82%.

The amorphous carbon material in comparative example 2 had a circularity of 0.92, and an electrode density of 1.32 g/cm$^3$. The capacity retention in this example after 300 cycles at 60°C was 35%, which decreased significantly. That may be because too much surface treatment caused a decrease in electrode density, and the area where particles are in contact with one another decreased, thereby causing rupture of conductive paths due to the cycle.

The amorphous carbon material in comparative example 3 was made of the raw material coke B, and the capacity retention in this example after 300 cycles at 60°C was 77%. That may be because, since this material had a content of the transition metals of 140 ppm and a vanadium content of 3 ppm, which were low, and the crystal growth proceeds further in this material than that in coke A, the material expanded or contracted more significantly in this material during the charging and discharging cycle than that in coke A.

The amorphous carbon materials in comparative example 4 and 5 were made of coke B. Although they had slightly higher initial efficiencies than the amorphous carbon materials in examples 1 and 4 that had the same circularities as comparative example 4 and 5, respectively, they had significantly lower initial discharge than those in examples 1 and 4. That may be because the amorphous carbon materials in comparative examples 4 and 5 have the reduced number of lithium insertion sites as amorphous carbon materials.

The examples 5 and 6 had the same circularity of 0.82. In examples 5 and 6, Lc(006) were 20 and 26 (nm), respectively, and Lc(006)/C0(006) were 30 and 39, respectively. The examples 5 and 6 had the same electrode density of 1.39 g/cm$^3$, and the capacity retentions in examples 5 and 6 after 300 cycles at 60°C were 87% and 85%, respectively, which means that they had high cycle characteristics.

Examples 7, 8, 9, and 10 were made of coke A as raw materials, and had a circularity of 0.82, 0.70, 0.88, and 0.90, respectively. Examples 7, 8, 9, and 10 had the same graphitization temperature of 2600°C. The graphite carbon materials in these examples had high electrode densities of 1.39, 1.34, 1.40, and 1.41 (g/cm$^3$), respectively. They had initial discharge of 299, 305, 298, and 295 mAh/g, respectively, and had the same initial efficiency of 95%. These examples had a circularity ranging from 0.7 to 0.9, which was an appropriate range, and the graphitization temperature was 2600°C. Besides, cake A that was a material of these example contained a larger amount of the transition metals. Therefore, these examples had high initial efficiencies and high initial discharges.

On the other hand, comparative example 6 had a circularity of 0.82 as well as examples 5 and 6, and had high cycle characteristics, i.e., 86% of the capacity retention after 300 cycles at 60°C. However, the thermal treatment temperature was 2250°C. Besides, Lc(006) was 16 (nm), and Lc(006)/C0(006) was 24, which were lower values, and the initial discharge was 270 (mAh/g) which was a significantly lower value.

The graphite carbon material in comparative example 7 had a circularity of 0.64, an electrode density of 1.28, which decreased by 8% as compared to the graphite carbon materials of examples 5, 6, 7, and 9. Lc(006) was 38(nm), and Lc(006)/C0(006) was 56. The capacity retention after 300 cycles at 60°C was 80%. Not being subjected to surface treatment, this material had a lower electrode density. Furthermore, since this material was graphitized at a higher temperature than that in example 5, the crystalline may have grown more slightly than example 5, and its cycle characteristics may have been slightly inferior to example 5. Example 6 and comparative example 7 were graphitized at 2800°C. However, the cycle characteristics of the graphite carbon material in comparative example 7 was inferior to those in example 6. That may be because of separation of the carbon layers.

The graphite carbon material in comparative example 8 was subjected to thermal treatment at 3000°C. In this example, Lc(006) was 50 (nm), and Lc(006)/C0(006) was 74. The capacity retention in this example after 300 cycles at 60°C was 66%. Besides, the circularity was 0.64, and the electrode density was 1.28. That may be because this material was heated at a high temperature of 3000°C to allow the crystal growth to proceed, and to cause significant expansion and contraction of the particles and significant deterioration of cycle characteristics.

The graphite carbon material of comparative example 9 had an electrode density of 1.37 though it had a circularity of 0.92. That may be because the circularity was so high that packing density decreased. This material could not perform charging and discharging.

In the graphite carbon material of comparative example 10, Lc(006) was 69(nm), and Lc(006)/C0(006) was 102. The capacity retention of this material after 300 cycles at 60°C was 81%. That may be because, since this material had a content of the transition metals of 10 ppm and a content of vanadium of 3 ppm, which were low, and the crystal growth proceeds further than that in coke A, the material expanded or contracted more significantly during the charging and discharging cycle than coke A.

The graphite carbon materials in comparative examples 11 and 12 were made of coke B and had circularities of 0.7 and 0.9, respectively, with graphitization temperature of 2600°C. Only the raw material coke differs between examples 8 and 10. Since coke B, in which the crystal growth proceeds further, was used as materials of comparative examples 11 and 12, the materials of comparative examples 11 and 12 had slightly lower initial efficiencies than those in examples 8 and 10 and higher initial discharges than those in examples 8 and 10. However, based on the measurement results of the graphite carbon materials in comparative examples 8 and 10, the capacity retentions in comparative examples 11 and 12 after 300 cycles at 60°C may be significantly lower than those in examples 8 and 10.

As can been from forgoing description, it was proved that control of impurities contained in the raw material and the heat-treated product at a predetermined amount or more, particle shapes according to modification treatment on surfaces of carbon materials, and the thermal treatment temperature allows for producing carbon materials, for lithium-ion secondary batteries, having excellent packability and excellent cycle characteristics.

INDUSTRIAL APPLICABILITY

The amorphous carbon material according to the example of the embodiment can be effectively used for, e.g., hybrid electric vehicles, and storage of electricity such as solar power generation system and wind power generation system. The graphite carbon material according to the example of the embodiment can be effectively used for, e.g., stationary lithium-ion batteries for, e.g., electric vehicles and houses.

DESCRIPTION OF REFERENCE CHARACTERS

10  lithium-ion secondary battery
11  negative electrode
12  negative electrode current collector
13  positive electrode
14  positive electrode current collector
15  separator
16  package

**Claims**

1.  An amorphous carbon material for a negative electrode of a lithium-ion secondary battery, wherein
    the amorphous carbon material has
    a circularity of 0.7 to 0.9, both inclusive,
    a mean particle size of 1 μm to 30 μm, both inclusive, and
    a total content of transition metals of 700 ppm to 2500 ppm, both inclusive.

2.  The amorphous carbon material of claim 1, wherein
    the amorphous carbon material contains 250 ppm or more of vanadium.

3.  A graphite carbon material for a negative electrode of a lithium-ion secondary battery, wherein
    the graphite carbon material has a circularity of 0.7 to 0.9, both inclusive, and a mean particle size of 1 μm to 30
    μm, both inclusive, and a total content of transition metals of 100 ppm to 2500 ppm, both inclusive.

4.  The graphite carbon material of claim 3, wherein
    a crystallite size Lc(006) calculated from a wide-angle X-ray diffraction line is from 20 nm to 27 nm, both inclusive,
    and Lc(006)/C0(006) defined as a value indicating the number of lithium insertion sites in a crystallite is from 30 to
    40, both inclusive.

5.  The graphite carbon material of claim 3 or 4, wherein
    the graphite carbon material contains 100 ppm or more of vanadium.

6.  A method for producing a carbon material for a negative electrode of a lithium-ion secondary battery, the method
    comprising the steps of:

        pulverizing and classifying petroleum non-needle green coke having an optically isotropic structure ratio of 75%
        or more and a total content of transition metals of 1000 ppm to 2500 ppm, both inclusive;
        applying a compressive shearing stress to the petroleum non-needle green coke pulverized and classified to
        allow the petroleum non-needle green coke to have a circularity of 0.7 to 0.9, both inclusive; and
        carbonizing the petroleum non-needle green coke, to which the compressive shearing stress has been applied,
        at a temperature of 900°C to 1500°C, both inclusive, to produce an amorphous carbon material.

7.  The method of claim 6, wherein
    the step of carbonizing the petroleum non-needle green coke includes carbonizing the petroleum non-needle green
    coke at a temperature of 1000°C to 1500°C, both inclusive.

8.  The method of claim 6 or 7, further comprising the step of
    heating the amorphous carbon materials at a temperature of 2300°C to 2900°C, both inclusive, to produce a graphite
    carbon material.

9.  The method of claim 8, wherein
    the graphite carbon material has a total content of transition metals of 100 ppm to 2500 ppm, both inclusive.

10. The method of any one of claims 7-9, wherein
    the petroleum non-needle green coke being pulverized and classified has a nitrogen content of 1 wt% to 4 wt%,
    both inclusive.

11. The method of any one of claims 7-10, wherein

the petroleum non-needle green coke yet to be pulverized and classified has an optically isotropic structure ratio of 85% or more, both inclusive.

12. A lithium-ion secondary battery, wherein
either the amorphous carbon material of claim 1 or 2 or the graphite carbon material of any one of claims 3-5 is used as a material for its negative electrode.

# FIG.1

(a)
WITH SURFACE
TREATMENT
(JUST AFTER
TREATMENT)

(b)
WITH SURFACE
TREATMENT
(AFTER
CARBONIZATION)

(c)
WITH SURFACE
TREATMENT
(AFTER
GRAPHITIZATION)

# FIG.2

(a)

WITHOUT SURFACE
TREATMENT

(b)

WITHOUT SURFACE
TREATMENT
(AFTER
CARBONIZATION)

(c)

WITHOUT SURFACE
TREATMENT
(AFTER
GRAPHITIZATION)

FIG.3

FIG.4

<table>
<tr><td colspan="2" align="center">**INTERNATIONAL SEARCH REPORT**</td><td colspan="2">International application No.<br>PCT/JP2014/001632</td></tr>
</table>

A. CLASSIFICATION OF SUBJECT MATTER
*H01M4/587*(2010.01)i, *H01M10/0525*(2010.01)i

According to International Patent Classification (IPC) or to both national classification and IPC

B. FIELDS SEARCHED

Minimum documentation searched (classification system followed by classification symbols)
H01M4/587, H01M10/0525

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-172901 A (Showa Denko Kabushiki Kaisha),<br>05 July 2007 (05.07.2007),<br>entire text<br>& US 2010/0221543 A1 & EP 1961700 A1<br>& WO 2007/066673 A1 & KR 10-2008-0073706 A<br>& CN 101321695 A | 1–12 |
| A | JP 2009-238584 A (Hitachi Chemical Co., Ltd.),<br>15 October 2009 (15.10.2009),<br>entire text<br>(Family: none) | 1–12 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 May, 2014 (12.05.14) | Date of mailing of the international search report<br>20 May, 2014 (20.05.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/001632

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-50807 A (The Kansai Coke and Chemicals Co., Ltd.), 24 February 2005 (24.02.2005), entire text & US 2005/0014067 A1 & KR 10-0793691 B1 & CN 1577923 A | 1-12 |
| A | WO 2010/110441 A1 (Mitsubishi Chemical Corp.), 30 September 2010 (30.09.2010), entire text & JP 2010-251315 A & US 2012/0052393 A1 & EP 2413403 A1 & CN 102362381 A & KR 10-2012-0022731 A | 1-12 |
| A | JP 2004-63456 A (Mitsubishi Chemical Corp.), 26 February 2004 (26.02.2004), entire text & JP 2011-40406 A | 1-12 |
| A | JP 2005-158718 A (Showa Denko Kabushiki Kaisha), 16 June 2005 (16.06.2005), entire text & JP 2012-164681 A & US 2007/0092428 A1 & EP 1683219 A & WO 2005/043653 A1 & KR 10-2006-0065737 A & CN 1883068 A | 1-12 |
| A | JP 2009-184915 A (Hydro-Quebec), 20 August 2009 (20.08.2009), entire text & JP 2004-511422 A & US 2004/0053050 A1 & EP 1334065 A & WO 2002/034670 A1 | 1-12 |
| A | JP 11-263612 A (The Kansai Coke and Chemicals Co., Ltd.), 28 September 1999 (28.09.1999), entire text & US 6139990 A | 1-12 |
| P,A | WO 2013/051564 A1 (Toda Kogyo Corp.), 11 April 2013 (11.04.2013), entire text & JP 2013-79173 A | 1-12 |
| P,A | WO 2013/058347 A1 (Showa Denko Kabushiki Kaisha), 25 April 2013 (25.04.2013), entire text (Family: none) | 1-12 |
| P,A | WO 2014/046144 A1 (Mitsubishi Chemical Corp.), 27 March 2014 (27.03.2014), entire text (Family: none) | 1-12 |

Form PCT/ISA/210 (continuation of second sheet) (July 2009)

**INTERNATIONAL SEARCH REPORT**

| | International application No. |
|---|---|
| | PCT/JP2014/001632 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | WO 2014/002477 A1  (MT Carbon Co., Ltd.),<br>03 January 2014 (03.01.2014),<br>entire text<br>(Family: none) | 1-12 |

Form PCT/ISA/210 (continuation of second sheet) (July 2009)

**REFERENCES CITED IN THE DESCRIPTION**

**Patent documents cited in the description**

- JP 2012046419 A
- JP 4171259 B

**Non-patent literature cited in the description**

- *Carbon,* 2006, 52-60